(19) Europäisches Patentamt / European Patent Office / Office européen des brevets

(11) **EP 3 838 960 A1**

(12) **EUROPÄISCHE PATENTANMELDUNG**

(43) Veröffentlichungstag:
**23.06.2021 Patentblatt 2021/25**

(51) Int Cl.:
**C08G 18/32** (2006.01)      **C08G 18/73** (2006.01)
**C08G 18/10** (2006.01)

(21) Anmeldenummer: **19216783.1**

(22) Anmeldetag: **17.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR EINSTELLUNG DER MOLEKULARGEWICHTSVERTEILUNG BEI POLYKONDENSATIONEN UND/ODER POLYADDITIONEN**

(57)   Die Erfindung betrifft ein Verfahren zur Einstellung der Molekulargewichtsverteilung eines Polymers in einer bevorzugt überwiegend irreversiblen Polykondensationsreaktion und/oder Polyadditionsreaktion vom Typ AA+BB. Des Weiteren betrifft die Erfindung das Polymer, das mit dem erfindungsgemäßen Verfahren erhalten wird, sowie die weitere Umsetzung dieses Polymers unter Zudosierung weiterer Monomere. Außerdem betrifft die Erfindung eine Vorrichtung zur Durchführung des erfindungsgemäßen Verfahrens.

**Fig. 1**

**Beschreibung**

Die Erfindung betrifft ein Verfahren zur Einstellung der Molekulargewichtsverteilung eines Polymers in einer bevorzugt überwiegend irreversiblen Polykondensationsreaktion und/oder Polyadditionsreaktion vom Typ AA+BB. Des Weiteren betrifft die Erfindung das Polymer, das mit dem erfindungsgemäßen Verfahren erhalten wird, sowie die weitere Umsetzung dieses Polymers unter Zudosierung weiterer Monomere. Außerdem betrifft die Erfindung eine Vorrichtung zur Durchführung des erfindungsgemäßen Verfahrens.

Eine Vielzahl technisch wichtiger Polymere wird bekanntlich in Stufenwachstumsreaktionen hergestellt, bei denen multifunktionelle Monomere, die über unterschiedliche Endgruppen verfügen, miteinander reagieren. Beispiele hierfür sind Polyester, Polyurethane, Polycarbonate, Polysulfone oder Polyamide. All diese Reaktionen sind dadurch gekennzeichnet, dass Endgruppen einem Typ A mit anderen Endgruppen vom Typ B reagieren. Wenn unterschiedliche Endgruppen A und B auf einem Molekül vereint sind, spricht man von einer Reaktion vom Typ AB. Beispiele hierfür sind Polylactid aus Milchsäure oder Polyamid 6, aus dem Ringöffnungsprodukt von Caprolactam. Wenn jeweils zwei Endgruppen auf dem Typ A auf einem Molekül vereinigt sind und zwei Endgruppen vom Typ B auf einem andren Molekül vereinigt sind, spricht man von einer Reaktion vom Typ AA+BB. Beispiele hierfür sind Polyethylenterephthalat aus Diethylenglycol und Terephthalsäure, Polycarbonat aus Bisphenol A und Diphenylcarbonat, die Herstellung von Polyurethanen aus Diisocyanaten und Diolen sowie Polyamid 6.6 aus Hexamethylendiamin und Adipinsäure (siehe z.B. das Kapitel "Step Growth Polymerization" von N.A. Dotson, R. Galvan, R.L. Laurence and M. Tirrell in "Polymerization Process Modeling" Wiley-VCH 1992 ISBN 1-56081-693-7).

Bekanntlich gibt es zwei Typen von Stufenwachstumsreaktionen, Polykondensationen und Polyadditionen. Bei Polykondensationen wird ein niedermolekulares Reaktionsprodukt (häufig Wasser, aber auch andere Moleküle wie Phenol oder Natriumchlorid bzw. Chlorid, das dann anschließend mit Natronlauge zu Natriumchlorid umgesetzt wird) bei der Reaktion abgetrennt, bei Polyadditionen wie beispielsweise der Herstellung von Polyurethanen gibt es kein niedermolekulares Reaktionsprodukt, das abgespalten wird.

Die gegenwärtige Erfindung betrifft alle Arten von Stufenwachstumsreaktionen, sowohl Polykondensationen im engeren Sinne als auch Polyadditionen. In der Literatur wird teilweise Polykondensation als Synonym zu der oben definierten Stufenwachstumsreaktion verwendet. "Polyaddition" wird als Synonym zu "Polyadditionsreaktion" verwendet, ebenfalls "Polykondensation" als Synonym zu "Polykondensationsreaktion".

Neben dem mittleren Molekulargewicht spielt die Molekulargewichtsverteilung, insbesondere die Polydispersität, bei den mechanischen und rheologischen Eigenschaften von Polymeren bekanntermaßen eine wichtige Rolle. Die Materialeigenschaften, insbesondere die Viskosität, hängen darüber hinaus davon ab, ob die Breite der Molekulargewichtsverteilung über Verzweigungen der Polymere oder durch einen entsprechenden Mix aus unterschiedlichen linearen Ketten erzielt wurde. Die Strukturviskosität ist bei verzweigten Polymeren höher als bei einer Mischung aus unterschiedlichen linearen Ketten. Lange Molekülketten sind bekanntlich stark mit den anderen Molekülen in der Umgebung verschlauft und haben daher längere Relaxationszeiten. Ein Anteil von Molekülen mit hoher Molmasse führt daher - bei gleicher anzahlgemittelten Molmasse - zu einer höheren Nullviskosität und stärkerer Strukturviskosität. Welcher Effekt erwünscht ist, hängt von der Verwendung und Weiterverarbeitung des Polymers ab. Bei einer Verarbeitung im Spritzguss beispielsweise werden grundsätzlich niedrige Viskositäten angestrebt, um lange Fließwege zu ermöglichen. Bei Extrusionsprozessen hingegen ist entscheidend, wie stabil das Material unter Schwerkrafteinfluss bleibt, wenn es aus der Düse des Extruders ausgepresst wird.

Gemessen wird die Molmassenverteilung bevorzugt mit dem Verfahren der Gelpermeationschromatographie (GPC), das dem Fachmann geläufig ist, insbesondere unter Verwendung von Polystyrolstandards. "Molekulargewichtsverteilung" wird synonym zu "Molmassenverteilung" verwendet.

Die Polydispersität kann jedoch nicht nach Belieben eingestellt werden, da die Art der Polymerisationsreaktion die Verteilung der Molekülmassen beeinflusst. Bei der Synthese von Polypropylen wird beispielsweise eine breite Molmassenverteilung gezielt durch radikalischen Abbau und anschließender Compoundierung eingestellt. Dieses Verfahren ist jedoch nur bei Polymeren anwendbar, die sich mit Radikalen abbauen lassen. Bei Polykondensationen oder Polyadditionen, wie z.B. der Synthese von Polycarbonat, wird die Breite der Verteilung üblicherweise durch Zugabe von sog. Verzweigern, also Monomeren mit mehr als 2 funktionellen Gruppen, oder durch gezielte Zugabe von hochmolekularen Ketten in einem gesonderten Prozess erreicht. Diese Verfahren sind aufwändig, weil sie weitere Prozessschritte oder eine spezielle Katalyse erfordern.

H. Tobita, Y. Ohtani (Control of Molecular Weight Distribution in Step-Growth Polymerization, Polymer 1992, Vol. 33, Nr. 4, S. 801-811) beschäftigen sich mit der kinetischen Berechnung für Polykondensationen / -additionen, mit denen eine bestimmte Verteilung des Molekulargewichts erreicht werden soll, wobei sich die Veröffentlichung auf folgende Konfigurationen beschränkt: Rohrreaktor ohne Rückführung und Batch-Reaktor. Die Kondensationsreaktionen zwischen bifunktionellen Monomeren können dabei vom Typ AB bzw. AA+BB sein, wobei A und B für verschiedene funktionelle Gruppen stehen, die sich miteinander verbinden können. Sie weisen darauf hin, dass die Berechnung für eine Polymerisationsreaktion von AA-Monomeren mit BB-Monomeren schwieriger ist und vernachlässigen in ihren Berechnungen für die Kinetik der Polymerisation von AA-BB-Polymeren Rück- und Nebenreaktionen. Des Weiteren beziehen sie sich auf einen Rohrreaktor und offenbaren, dass eine bestimmte Polydispersität durch die Zugabe von Monomeren nach einer ersten Reaktionsphase im Rohrreaktor sowie die Reaktionsdauer insgesamt erzielt werden könne. Die Veröffentlichung offenbart keine Lehre oder einen Hinweis wie das Molekulargewicht bei einer Anlagenkonfiguration mit Rückführung einzustellen ist. Auch offenbart die Veröffentlichung nicht die Reaktion von bi- und mehrfunktionellen Monomeren (Verzweigern). Es ist davon auszugehen, dass die Anlagenkonfiguration der Veröffentlichung zu Problemen bei mit dem Umsatz stark ansteigender Viskositäten führen würde, denn durch die hohe Umpumprate im Loop herrscht dort eine gleichmäßige Viskosität. Ebenfalls ist die offenbarte Analgenkonfiguration insbesondere bei exothermen Reaktionen ungünstig, da sowohl im Batch- als auch im kontinuierlichen Prozess unerwünschte Temperaturspitzen auftreten. Im Batch-Fall lassen sich solche Temperaturspitzen nur durch eine sehr langsame Reaktion vermeiden, im kontinuierlichen Fall ist eine isotherme Fahrweise für nennenswerte Anlagengrößen unmöglich. Weiterhin schränkt die Anlagenkonfiguration die Variation der Breite der Verteilung ein und würde im Fall des Rohrreaktors eine Vielzahl von Monomerdosierstellen erfordern.

Ein Beispiel für die Herstellung von Polymeren in einer Stufenwachstumsreaktion vom Typ AA+BB ist die dem Fachmann geläufige Herstellung von thermoplastischen Polyurethanen aus Diisocyanaten und Polyolen durch Umsetzung auf einem Reaktor mit enger Verweilzeitverteilung. So beschreibt die DE 2302564 die Herstellung von Polyurethan durch Reaktion auf einem mehrwelligen, selbstreinigenden Extruder. Auf die Einstellung der Breite der Molekulargewichtsverteilung wird dort nicht eingegangen.

Doppelschneckenextruder weisen, wie der Fachmann weiß, eine enge Verweilzeitverteilung auf. Dies ist beispielsweise in "Residence time distribution in a corotating twin-screw extruder", Chemical Engineering Science 55 (2000) 1641-1651 dargestellt. Typischerweise hat ein Doppelschneckenxtruder eine enge Verweilzeitverteilung, die einer theoretischen Anzahl von Rührkesseln von mehr als sechs entspricht.

DE 10 2011 085 944 betrifft die kontinuierliche Herstellung von Polyurethan in einem Kreislaufreaktor mit flexibel einstellbaren Mischbedingungen und offenbart, dass der Einsatz von Katalysatoren reduziert werden kann, wenn ein Teil der Reaktionsmischung nach Durchlaufen einer Mischvorrichtung in den Eingangsstrom der Mischvorrichtung zurückgeführt wird. Die Druckschrift beschäftigt sich nicht mit der Polydispersität der erhaltenen Polymere, sondern mit der Frage wie ein ausreichender Umsatz bereits mit geringen Katalysatormengen erreicht werden kann.

EP 0 598 283 beschreibt ein kontinuierliches Verfahren zur Darstellung von Polyurethan-Prepolymeren. Die Druckschrift offenbart, dass durch Rückvermischung von schon gebildeten Prepolymeren mit Monomeren und anschließende Kettenverlängerung, also Umsetzung des Prepolymers mit niedermolekularem Diol oder Triol, der Umsatz der Reaktion gesteuert werden kann. Dabei beschäftigt sich die Druckschrift jedoch nicht mit der Verteilung der Molekulargewichte. Außerdem wird gelehrt, dass eine Verlängerung der Verweilzeit im Reaktor zu einer untragbaren Ausstoßverringerung führt.

EP 2 371 868 offenbart die Synthese eines Prepolymers durch Substanzpolymerisation, also mit der Zugabe eines Radikalstarters in einem Kreislauf, der einen Mischer und einen Extruder enthält. Aus dem Kreislauf wird ein Teil des erhaltenen Prepolymers abgezweigt und in einen Statikmischer geleitet. Auch diese Druckschrift beschäftigt sich nicht mit der Einstellung der Molekulargewichte.

Es war daher Aufgabe der vorliegenden Erfindung ein Verfahren für Stufenwachstumssreaktionen, also Polykondensationen und Polyadditionen, vom Typ AA+BB zur Verfügung zu stellen, mit dem die Polydispersität des zu erhaltenden Polymers eingestellt werden kann.

Diese Aufgabe wurde gelöst durch ein Verfahren zur Einstellung der Molekulargewichtsverteilung eines Polymers oder Prepolymers vom Typ AA+BB in einer Polyadditionsreaktion und/ oder Polykondensationsreaktion, wobei das Verfahren die folgenden Schritte umfasst:

(a) Mischen eines Monomerstroms (A) enthaltend oder bestehend aus AA-Monomeren und eines Monomerstroms (B) enthaltend oder bestehend aus BB-Monomeren in einer ersten Mischungseinrichtung (7), so dass ein Mischungsstrom (C) erhalten wird,

(b) Einleiten des Mischungsstroms (C) in einen Rücklaufstrom (D), der in einem Kreislauf geführt wird, unter Erhaltung eines Kreislaufstroms (X);

(c) Teilung des Kreislaufstroms (X) in zwei Teilströme, von denen der erste Teilstrom als Polymerstrom (E) aus dem Kreislaufstrom (X) entnommen wird und der zweite Teilstrom als Rücklaufstrom (D) verbleibt,
wobei das Verhältnis $F_{ratio}$ des Massenstroms [in kg/h] des Rücklaufstroms $F_{recycle}$ (D) zur Summe der Massenströme [in kg/h] der Monomerströme (A) und (B) von 5 bis 35 beträgt,
das Verhältnis $\alpha$ der Verzweigungsdichte der Polymere im Polymerstrom (E) $p$ zu der kritischen Verzweigungsdicht $\alpha = \rho/\rho_{kritisch}$ < 0,8 beträgt;

(i) das $Mn_0$ oder $Mn_v$ [in Anzahl der Monomereinheiten AA und BB] durch folgende Gleichungen eingestellt wird $Mn_0 = 1/(1-KZ1)$ oder, falls Verzweiger anwesend sind,

$$Mn_v = Mn_0/(1-(f-2)*\rho/2* Mn_0);$$

und/oder
(ii) das $Mw_0$ oder $Mw_v$ [in Anzahl der Monomereinheiten AA und BB] durch folgende Gleichungen eingestellt wird

$$Mw_0 = (1-KZ1)/(1+KZ1)+8* KZ1*( F_0- KZ1+1)/(1+ KZ1)/(1+ F_0)/(1- KZ1)\text{\textasciicircum}2$$

oder, falls Verzweiger anwesend sind,

$$Mw_v = Mw_0 (1+\rho) / (1-(f-2)*\rho (Mw_0-1)),$$

wobei $Mn_0$ und Mwojeweils die Anzahl- und Gewichtsmittel der Molekularverteilung sind, welche sich ohne Verzweigung einstellen würden, und $Mn_v$ und $Mw_v$ jeweils die Anzahl- und Gewichtsmittel der Molekularverteilung sind, welche sich mit Verzweigungen einstellen würden, f die Funktionalität der Verzweigung, welche gleich 3 oder 4 ist, KZ1 das Molverhältnis der Monomerströme A zu B ist, $F_0$ = Fratio*(1-KZ1) ist, Fratio das Verhältnis Massenstrom des Rücklaufstroms zur Summe der Massenströme der Monomere A und B ist und $\rho$ die Verzweigungsdichte, definiert als molarer Anteil der Verzweiger bezogen auf die Anzahl der Monomereinheiten im Polymer ist und

$$\rho_{kritisch} = \frac{(1+ \rho + \rho\, Mw_u)}{(Mw_u - 1 - \rho)}$$

ist und $MW_U$ das durch Messung erhaltene Gewichtsmittel der Molekulargewichtsverteilung in Zahl der Monomereinheiten ist; und wobei die Einstellung der Molekulargewichte durch eine Änderung der Kennzahl KZ1 und/oder durch eine Änderung der $F_{recycle}$ erfolgt.

Dieses Verfahren ist besonders geeignet für Polyadditionsreaktionen und ganz besonders gut geeignet für die Herstellung von Polyurethanpolymeren oder -prepolymeren aus Diisocyanaten und Polyolen mit einstellbaren Molmassenverteilungen.

Durch die Einstellung der zwei Parameter KZ1 und $F_{recycle}$ werden die gewünschten Sollwerte für die Mn (KZ1) und Mw ($F_{recycle}$) voreingestellt. Die Voreinstellung gemäß den oben angegebenen Beziehungen führt überraschenderweise bereits zu gute Näherungen für die Sollwerte, obwohl die Formeln nur empirische Approximationen darstellen. Im Allgemeinen können bei jedem Prozess abgesehen von der endlichen Genauigkeit der Approximation weitere Abweichungen von den gewünschten Sollwerten auftreten, begründet durch Messfehler bzw. -ungenauigkeiten und Schwankungen der Dosierung als auch der Prozessbedingungen (z.B. Temperatur). Diese werden erforderlichenfalls in einem weiteren Schritt durch eine Regelung korrigiert. Unter dem Begriff Regeln bzw. Regelung wird im Rahmen der vorliegenden Erfindung einen Vorgang gemäß der Norm DIN IEC 60050-351:2013 verstanden, bei dem fortlaufend eine Größe, die Regelgröße erfasst, mit einer anderen Größe, dem Sollwert, verglichen und im Sinne einer Angleichung an den Sollwert beeinflusst wird. Kennzeichnend für das Regeln ist der geschlossene Wirkungsablauf, bei dem die Regelgröße sich im Wirkungsweg eines Regelkreises fortlaufend selbst beeinflusst. Die Wahl des Regelgesetzes und die Auslegung der Regelung ist dem Fachmann bekannt und kann nach in Literatur bekannten Standardmethoden erfolgen (z.B. Heinz Unbehauen, Regelungstechnik I-III, Springer Vieweg (2008) ISBN 978-3-8348-9491-5).

Im vorliegenden Fall wird eine Messung der gewünschten Ausgangsgröße(n) Mn und/oder Mw (z.B. Messung der GPC oder Schmelzviskosität, intrinsische Viskosität oder NMR) zur Verfügung gestellt und die Einstellwerte entsprechend verändert, um den/die gewünschten Sollwerte(e) von Mn und/oder Mw zu erreichen.

Insbesondere betrifft die vorliegende Erfindung:

1. Ein Verfahren zur Einstellung der Molekulargewichtsverteilung eines, bevorzugt verzweigten, Polymers oder Prepolymers vom Typ AA+BB in einer Polyadditionsreaktion und/ oder Polykondensationsreaktion, wobei das Verfahren die folgenden Schritte umfasst:

(a) Mischen eines Monomerstroms (A) enthaltend oder bestehend aus AA-Monomeren und eines Monomerstroms (B) enthaltend oder bestehend aus BB-Monomeren in einer ersten Mischungseinrichtung (7), so dass ein Mischungsstrom (C) erhalten wird,

(b) Einleiten des Mischungsstroms (C) in einen Rücklaufstrom (D), der in einem Kreislauf geführt wird, unter Erhaltung eines Kreislaufstroms (X);

(c) Teilung des Kreislaufstroms (X) in zwei Teilströme, von denen der erste Teilstrom als Polymerstrom (E) aus dem Kreislaufstrom (X) entnommen wird und der zweite Teilstrom als Rücklaufstrom (D) verbleibt,

wobei das Verhältnis Fratio [kg/kg] des Massenstroms [kg/h] des Rücklaufstroms $F_{recycle}$ (D) zur Summe der Massenströme der Monomerströme [kg/h] (A) und (B) von 5 bis 35 beträgt,

das Verhältnis $\alpha$ der Verzweigungsdichte der Polymere im Polymerstrom (E) $\rho$ zu der kritischen Verzweigungsdicht $\alpha = \rho/\rho_{kritisch} < 0{,}8$ beträgt, und

(i) das $Mn_0$ oder $Mn_v$ [in Anzahl der Monomereinheiten AA+BB] durch folgende Gleichungen eingestellt wird $Mn_0 = 1/(1-KZ1)$ oder, falls Verzweiger anwesend sind,

$$Mn_v = Mn_0/(1-(f-2)*\rho/2* Mn_0);$$

und/oder

(ii) das $Mw_0$ oder $Mw_v$ [in Anzahl der Monomereinheiten AA+BB] durch folgende Gleichungen eingestellt wird

$$Mw_0 = (1-KZ1)/(1+KZ1)+8* KZ1*( F_0- KZ1+1)/(1+ KZ1)/(1+ F_0)/(1- KZ1)^{\wedge}2$$

oder, falls Verzweiger anwesend sind,

$$Mw_v = Mw_0 (1+\rho) / (1-(f-2)*\rho (Mw_0-1)),$$

wobei $Mn_0$ und $Mw_0$ jeweils die Anzahl- und Gewichtsmittel der Molekularverteilung sind, welche sich ohne Verzweigung einstellen würden, und $Mn_v$ und $Mw_v$ jeweils die Anzahl- und Gewichtsmittel der Molekularverteilung sind, welche sich mit Verzweigungen einstellen würden, f die Funktionalität der Verzweigung, welche gleich 3 oder 4 ist, KZ1 das Molverhältnis der Monomerströme A zu B ist, $F_0 = $ Fratio*(1-KZ1) ist, Fratio das Verhältnis Massenstrom des Rücklaufstroms zur Summe der Massenströme der Monomere A und B ist und $\rho$ die Verzweigungsdichte, definiert als molarer Anteil der Verzweiger bezogen auf die Anzahl der Monomereinheiten im Polymer ist,

$$\rho_{kritisch} = \frac{(1 + \rho + \rho\, Mw_u)}{(Mw_u - 1 - \rho)}$$

ist und $Mw_u$ das durch Messung erhaltene Gewichtsmittel der Molekulargewichtsverteilung in Zahl der Monomereinheiten ist; und wobei die Einstellung der Molekulargewichte durch eine Änderung der Kennzahl KZ1 und/oder durch eine Änderung der $F_{recycle}$ erfolgt.

Durch die beiden Stellgrößen KZ1 und $F_{recycle}$ können bei gegebener Verzweigungsdichte $\rho$ und Funktionalität f des Verzweigers, sowohl Mn als auch Mw eingestellt werden. Ist beispielsweise eine Erhöhung des Mn gewünscht so wird KZ1 erhöht. Ist eine Erhöhung des Mw gewünscht, so wir $F_{recycle}$ erhöht.

2. Verfahren nach Ausführungsform 1, dadurch gekennzeichnet, dass Abweichungen von Mn durch Variation der Stellgröße KZ1 und/oder von Mw durch Variation der Stellgröße $F_{recycle}$ korrigiert werden.

Die Korrektur erfolgt gemäß gängigen Verfahren der Regelungstechnik. Die Formeln ermöglichen außerdem eine Korrektur gemäß modellbasierter Regelungsverfahren.

In bevorzugten Ausführungsformen werden bei Änderungen der Stellgrößen die Temperatur und der Durchsatz des Verfahrens konstant gehalten, um eine Änderung der Verzweigungsdichte zu vermeiden.

3. Verfahren nach Ausführungsform 1 oder 2, dadurch gekennzeichnet, dass das $M_w$ der Polymere im Polymerstrom (E) durch GPC bestimmt wird, bezeichnet als $M_{WGPC}$, und eine Korrektur der empirischen Formeln gemäß

$$Mw_{GPC}= Mw_v*(1- \rho /3*Mn_v) \qquad \text{für f=3}$$

oder

$$Mw_{GPC}= Mw_v*(1- \rho *Mn_v) \qquad \text{für f=4}$$

erfolgt.

4. Verfahren nach einer der vorstehenden Ausführungsformen, dadurch gekennzeichnet, dass

(i) die Reaktion irreversibel oder überwiegend irreversibel mit einer Gleichgewichtskonstante von $k_{hin}/k_{rück} >$ 10 ist; und/oder
(ii) die Polykondensation und/oder Polyaddition in homogener Phase stattfindet.

5. Verfahren nach einer der vorstehenden Ausführungsformen, dadurch gekennzeichnet, dass das Verhältnis Fratio des Massenstroms des Rücklaufstroms zur Summe der Massenströme der Monomerströme (A) und (B) von 5 bis 20 beträgt, bevorzugt 7 bis 17, weiter bevorzugt 10 bis 17.

6. Verfahren nach einer der vorstehenden Ausführungsformen, dadurch gekennzeichnet, dass der Monomerstrom (A) ein Polyisocyanat enthält oder daraus besteht; und/oder
der Monomerstrom (B) ein Polyol enthält oder daraus besteht
und/oder
dass die Monomerströme (A) und (B) im Wesentlichen frei von Wasser sind.

7. Verfahren nach einem der vorstehenden Ausführungsformen, dadurch gekennzeichnet, dass der Monomerstrom (A) mindestens ein aliphatisches, cycloaliphatisches, aromatisches oder araliphatisches Diisocyanat oder Mischungen davon enthält oder daraus besteht, insbesondere 1,6- Hexamethylendiisocyanat, 1,5-Pentamethylendiisocyanat, 4,4-Methylendiphenyldiisocyanat, Isophorondiisocynat, 4,4'-Methylenbis(cyclohexylisocyanat) oder Mischungen davon, wobei der Monomerstrom (A) bevorzugt 1,6-Hexamethylendiisocyanat oder 1,5-Pentamethylendiisocyanat enthält oder daraus besteht und ganz besonders bevorzugt 1,6-Hexamethylendiisocyanat enthält oder daraus besteht;
und/oder
der Monomerstrom (B) mindestens ein aliphatisches, araliphatisches, aromatisches oder cycloaliphatisches Diol oder Mischungen davon enthält oder daraus besteht, insbesondere 1,4-Butandiol, Ethandiol, 1,6-Hexandiol, 1,4-Bis-(β-hydroxyethoxy-)benzol oder Mischungen davon, wobei der Monomerstrom (B) bevorzugt 1,4-Butandiol enthält oder daraus besteht.

8. Verfahren nach Ausführungsform 6 oder 7, dadurch gekennzeichnet, dass KZ1 im Mischungsstrom (C) von 0,50 bis 0,95 beträgt, bevorzugt von 0,75 bis 0,85; und/oder dass $F_{ratio}$ 2 bis 200 [kg/kg] beträgt, bevorzugt 4 bis 32.

9. Verfahren nach Ausführungsform 6 bis 8, dadurch gekennzeichnet, dass der Monomerstrom (A) aus zu mindestens 85 Gew.-% aus, bevorzugt zu mindestens 95 Gew.-% und ganz besonders bevorzugt zu 99 Gew.-% aus 1,6-Hexamethylendiisocyanat oder 1,5-Pentamethylendiisocyanat, bevorzugt aus 1,6-Hexamethylendiisocyanat besteht und/oder der Monomerstrom (B) zu mindestens 75 Gew.-%, bevorzugt zu mindestens 90 Gew.-% und ganz besonders bevorzugt zu 98 Gew.-% aus 1,4-Butandiol besteht und/oder die Temperatur des Rücklaufstroms (D) von 160 bis 200 °C, bevorzugt 170 bis 190 °C beträgt.

10. Ein Verfahren zur Einstellung der Molekulargewichtsverteilung eines, bevorzugt verzweigten, Polymers oder Prepolymers in einer Polyadditionsreaktion und/oder Polykondensationsreaktion vom Typ AA+BB, wobei das Verfahren die folgenden Schritte umfasst:

(a) Mischen eines Monomerstroms (A) enthaltend oder bestehend aus AA-Monomeren und eines Monomerstroms (B) enthaltend oder bestehend aus BB-Monomeren in einer ersten Mischungseinrichtung (7), so dass ein Mischungsstrom (C) erhalten wird, wobei das molare Verhältnis von Strom (A) zu Strom (B) KZ1 beträgt,
(b) Einleiten des Mischungsstroms (C) in einen Rücklaufstrom (D), der in einem Kreislauf geführt wird, unter Erhaltung eines Kreislaufstromes (X),

(c) Teilung des Stroms (X) in zwei Teilströme, von denen der erste Teilstrom als Polymer- oder Prepolymerstrom (E) aus dem Kreislauftrom (X) entnommen wird und der zweite Teilstrom als Rücklaufstrom (D) verbleibt, wobei das Verhältnis Fratio des Massenstroms des Rücklaufstroms (D) zur Summe der Massenströme der Monomerströme (A) und (B) von 5 bis 35 beträgt,

(d) Zugabe von einem weiteren Monomerstrom (F), bevorzugt enthaltend oder bestehend aus AA-Monomeren, zu dem Strom (E), so dass das molare Verhältnis des in beiden Stufen insgesamt zugegebenen Stoffmenge des Monomers A zum Monomer B KZ2 beträgt, mit der Maßgabe, dass KZ2 > KZ1 ist,

(e) Umsetzung der Mischung in einem Reaktor mit enger Verweilzeitverteilung, bevorzugt einem Extruder, zu einem Polymerstrom (G);

wobei die Einstellung der Molekulargewichte durch eine Änderung des Verhältnisses der Kennzahlen KZ1 und KZ2 und/oder durch eine Änderung der $F_0$ Umpumprate erfolgt,

das Verhältnis $\alpha$ der Verzweigungsdichte der Polymere im Polymerstrom (E) $\rho$ zu der kritischen Verzweigungs-dicht $\alpha = \rho/\rho_{kritisch} < 0{,}8$ beträgt; und

(i) das $Mn_{0,ext}$ oder $Mn_{v,ext}$ durch folgende Gleichung eingestellt wird

$$Mn_{0,ext} = 1/(1\text{-}KZ2)$$

oder

$$Mn_{v,ext} = Mn_0/(1\text{-}(f\text{-}2)*\rho/2* Mn_{0,ext});$$

und/oder
(ii) das $Mw_{0,ext}$ oder $Mw_{v,ext}$ durch folgende Gleichung eingestellt wird

$$pp = (KZ2\text{-}KZ1)/(1\text{-}KZ1)$$

$$Mw_{0,ext} = Mw_{0,loop}+2*pp* Mn_{0,ext}$$

beziehungsweise im Fall von Verzweigungen

$$Mw_{v,ext} = Mw_{0,ext} (1+\rho) / (1\text{-}(f\text{-}2)*\rho (Mw_{0,ext} \text{-}1))$$

wobei $Mn_{0,ext}$ das zahlengemittelte Molekulargewicht und $Mw_{0,ext}$ das Gewichtsmittel des Polymers, welche sich ohne Verzweigung einstellen würden, $Mn_{v,ext}$ und $Mw_{v,ext}$ die entsprechenden Mittelwerte unter Berücksichtigung der Verzweigung, f die Funktionalität der Verzweigung, welche gleich 3 oder 4 ist, $F_0$ = Fratio*(1-KZ1) ist, Fratio das Verhältnis Massenstrom des Rücklaufstroms zur Summe der Massenströme der Monomere A und B ist und $\rho$ die Verzweigungsdichte, definiert als molarer Anteil der Verzweiger bezogen auf die Anzahl der Monomereinheiten im Polymer ist,

$$\rho_{kritisch} = \frac{(1 + \rho + \rho\, Mw_u)}{(Mw_u - 1 - \rho)}$$

ist und $Mw_u$ das durch Messung erhaltene Gewichtsmittel der Molekulargewichtsverteilung in Zahl der Monomereinheiten ist.

11. Verfahren nach Ausführungsform 10, dadurch gekennzeichnet, dass Abweichungen von Mn durch Variation der Stellgröße KZ2 und/oder von Mw durch Variation der Stellgröße $F_{recycle}$ korrigiert werden und/oder bei einer definierten KZ2 Abweichungen von Mw durch Variation der Stellgröße KZ1 korrigiert werden.

12. Verfahren nach Ausführungsform 10 oder 11, dadurch gekennzeichnet, dass KZ2 zwischen 0,9 und 0,999 bevorzugt zwischen 0,94 und 0,99 besonders bevorzugt zwischen 0,96 und 0,985 beträgt, wobei der Reaktor bevorzugt ein Extruder ist.

13. Verfahren nach einer der Ausführungsformen 10 bis 12, dadurch gekennzeichnet, dass die Umsetzung des Polymerstroms (E) die folgenden Schritte umfasst:

- Einleiten des Polymerstroms (E) in einen Reaktor, insbesondere Extruder, (18),
- Einleiten eines Monomerzuführungsstroms (F) enthaltend oder bestehend aus AA-Monomeren und/oder BB-Monomeren Monomeren und/oder niedermolekularen Verbindungen, die von den AA-Monomeren und den BB-Monomeren verschieden sind, in den Reaktor, insbesondere Extruder, (18) in Reaktorarbeitsrichtung, insbesondere Extruderarbeitsrichtung, stromabwärts der Einleitung des Polymerstroms (E),
- Umsetzen des Polymerstroms (E) mit dem Monomerzuführungsstrom (F) in dem Reaktor, insbesondere Extruder, (18) unter Erhalt eines Polymers (G), insbesondere als Extrudat, wobei bevorzugt Gase und / oder gasförmige Nebenprodukte der Umsetzung aus dem Extruder (18) durch Anlegen eines Unterdrucks von 50 mbar bis 800 mbar unter Normaldruck mittels eines an dem Reaktor, insbesondere Extruder, (18) angeordneten Entgasungsschachtes (19) entfernt werden,
- optional, Abkühlen des Polymers (G) unter seinen Schmelzpunkt in einer Kühlungseinrichtung (20),
- optional Zerkleinerung des Polymers (G) in einer Zerkleinerungseinrichtung (21).

14. Verfahren nach einer der Ausführungsformen 10 bis 14, dadurch gekennzeichnet, dass der Monomerzuführungsstrom (F) mindestens ein Polyisocyanat enthält oder daraus besteht, wobei Monomerzuführungsstrom (F) und Monomerstrom (A) bevorzugt dieselbe Zusammensetzung aufweisen.

15. Verfahren nach einer der Ausführungsformen 10 bis 14, dadurch gekennzeichnet, dass der Polymerstrom (E) bevorzugt nach einem Verfahren nach einem der Ausführungsformen 6 bis 9 erhalten wurde und der Monomerzuführungsstrom (F) mindestens ein aliphatisches, cycloaliphatisches, aromatisches oder araliphatisches Diisocyanat oder Mischungen davon enthält oder daraus besteht, insbesondere 1,6- Hexamethylendiisocyanat, 1,5-Pentamethylendiisocyanat, 4,4-Methylendiphenyldiisocyanat, Isophorondiisocynat, 4,4'-Methylenbis(cyclohexylisocyanat) oder Mischungen davon, wobei der Monomerzuführungsstrom (F) bevorzugt 1,6-Hexamethylendiisocyanat oder 1,5-Pentamethylendiisocyanat enthält oder daraus besteht und ganz besonders bevorzugt aus 1,6-Hexamethylendiisocyanat besteht und wobei Monomerzuführungsstrom (F) und Monomerstrom (A) bevorzugt dieselbe Zusammensetzung aufweisen.

16. Verfahren nach Ausführungsform 14 oder 15, dadurch gekennzeichnet, dass die Einleitung von Monomerzuführungsstrom (F) in der Weise erfolgt, dass die im Polymerstrom (E) enthaltenen Polymere und das im Monomerzuführungsstrom (F) enthaltene Polyisocyanat in einem Isocyanat-Index von 0,85 bis 1,2 vorliegen.

17. Polymer erhältlich nach einem Verfahren der vorliegenden Erfindung, wobei das Polymer einen Allophanatanteil von ≤ 0.75 mol-% aufweist, wobei das Polymer bevorzugt einen Allophanatanteil von ≤ 0,50 mol-%, bevorzugter von ≤ 0,30 mol-% aufweist.

18. Vorrichtung zur Durchführung eines Verfahrens der vorliegenden Erfindung, umfassend:

einen Monomer-A-Vorratsbehälter (1) von dem eine Monomer-A-Leitung (22) zur Förderung eines Monomerstroms (A) abgeht, die in eine erste Mischungseinrichtung (7) mündet;

einen Monomer-B-Vorratsbehälter (4) von dem eine Monomer-B-Leitung (25) zur Förderung eines Monomerstroms (B) abgeht, die in die erste Mischungseinrichtung (7) mündet, wobei die Monomer-B-Leitung (25) insbesondere stromaufwärts der ersten Mischungseinrichtung (7) mit der Monomer-A-Leitung (22) zusammengeführt wird;

eine Kreislaufzuführungsleitung (27) zur Förderung eines aus der ersten Mischungseinrichtung (7) austretenden Mischungsstroms (C), die in eine Kreislaufleitung (29) zur Förderung des Rücklaufstroms (D), unter Erhaltung eines Kreislaufstroms (X) und chemischen Umsetzung der Komponenten des Rücklaufstroms (D) mit den Komponenten des Mischungsstroms (C) mündet;

wobei die Kreislaufleitung (29) vorzugsweise in Strömungsrichtung eine zweite Mischungseinrichtung (8), eine temperierbare Mischungseinrichtung (9) sowie eine temperierbare Fördereinrichtung (10) umfasst; und

eine von der Kreislaufleitung (29) abgehende Polymerzuführungsleitung (30) zur Förderung eines Polymerstroms (E).

19. Vorrichtung nach Ausführungsform 18, dadurch gekennzeichnet, dass die Polymerzuführungsleitung (30) einlassseitig in einen Extruder (18) mündet und die Vorrichtung die folgenden weiteren Komponenten umfasst:

ein in der Polymerzuführungsleitung (30) vorgesehenes Druckregelventil (12) zur Regulierung des Drucks des Polymerstroms (E);

ein in der Polymerzuführungsleitung (30) angeordnetes und insbesondere stromabwärts des Druckregelventils (12) positioniertes Dreiwegeventil (13), von dem eine in einen Abfallbehälter (14) mündende Abfallleitung (31) abgeht, über die der Polymerstrom (E) insbesondere bei Inbetriebnahme, Außerbetriebnahme oder Störung der Vorrichtung ganz oder teilweise in den Abfallbehälter (14) geführt werden kann;

eine vorzugsweise an der Einmündung der Polymerzuführungsleitung (30) in den Extruder (18) angeordnete Entlüftungseinrichtung (17) zur Entfernung von Gasen und gasförmigen Nebenprodukten aus dem Polymerstrom (E);

eine vom Monomer-A-Vorratsbehälter (1) oder der Monomer-A-Leitung (22) abgehende und in Extruderarbeitsrichtung vorzugsweise stromabwärts der Polymerzuführungsleitung (30) in den Extruder (18) mündende Monomer-A-zuführungsleitung (24) zur Förderung eines Monomerstroms (F);

wobei der Extruder (18) zur Umsetzung der Komponenten des Polymerstroms (E) mit den Komponenten des Monomer-A-Zuführungsstroms (F) zu einem thermoplastischen Polyurethan (G) geeignet und diesem ein Entgasungsschacht (19) zur Entfernung von Gasen und gasförmigen Nebenprodukten mittels Unterdruck aus dieser Umsetzung zugeordnet ist, wobei der Entgasungsschacht (19) bevorzugt im in Extruderarbeitsrichtung letzten Drittel des Extruders (18) angeordnet ist;

optional eine hinter dem Auslass des Extruders (18) angeordnete Kühlungseinrichtung (20), vorzugsweise ein Wasserbad, zur Abkühlung des, bevorzugt thermoplastischen, Polymers, insbesondere Polyurethans, (G) unter seinen Schmelzpunkt;

optional eine sich an die Kühlungseinrichtung (20) anschließende Zerkleinerungseinrichtung (21) zur Zerkleinerung des abgekühlten, bevorzugt thermoplastischen, Polymers, insbesondere Polyurethans (G).

In einer Ausführungsform enthält der Monomerstrom A bevorzugt mindestens ein aliphatisches, cycloaliphatisches, aromatisches oder araliphatisches Diisocyanat oder Mischungen davon oder besteht daraus.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Beispiele für geeignete cycloaliphatische Diisocyanate sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin.

Beispiele für geeignete araliphatische Diisocyanate sind 1,3- und 1,4-Bis-(isocyanatomethyl)benzol (Xylylendiisocyanat; XDI), 1,3- und 1,4-Bis(1-isocyanato-1-methylethyl)-benzol (TMXDI).

Beispiele für geeignete Triisocyanate sind Triphenylmethan-4,4',4"-triisocyanat oder 4-Isocyanatomethyl-1,8-octandiisocyanat (TIN).

Bevorzugt enthält oder besteht der Monomerstrom A 1,6- Hexamethylendiisocyanat, 4,4-Methylendiphenyldiisocyanat, Isophorondiisocynat oder Mischungen davon. Insbesondere enthält oder besteht der Polyisocyanatstrom aus 1,6-Hexamethylendiisocyanat.

In einer Ausführungsform enthält der Monomerstrom B mindestens ein aliphatisches, araliphatisches, aromatisches oder cycloaliphatisches Diol oder Mischungen davon oder besteht daraus.

Beispiele für aliphatische, araliphatische, aromatischen oder cycloaliphatische Diole sind 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, 1,3-Cyclobutandiol, 1,3-Cyclopentandiol, 1,2-, 1,3- und 1,4-Cyclohexandiol, 1,4-Cyclohexandimethanol, 2-Cyclohexen-1,4-diol, 2-Methyl-1,4-cyclohexandiol, 2-Ethyl-1,4-cyclohexandiol, 2,2,4,4-Tetramethyl-1,3-cyclobutandiol, hydriertes Bisphenol A (2,2-Bis(4-hydroxycyclohexyl)propan), 1,3-Cycloheptandiol, 1,4-Cycloheptandiol, 2-Methyl-1,4-cycloheptandiol, 4-Methyl-1,3-cycloheptandiol, 4,4'-(1-Methylethyliden)-biscyclohexanol, 1,3-Cyclooctandiol, 1,4-Cyclooctandiol, 1,5-Cyclooctandiol, 5-Methyl-1,4-cyclooctandiol, 5-Ethyl-1,4-cyclooctandiol, 5-Propyl-1,4-cyclooctandiol, 5-Butyl-1,4-cyclooctandiol, 1,2-Benzoldimethanol und 1,4-Bis-($\beta$-hydroxyethoxy-)benzol.

Bevorzugt enthält oder besteht der Monomerstrom B aus 1,4-Butandiol, Ethandiol, 1,6-Hexandiol, 1,4-Bis-($\beta$-hydroxyethoxy-)benzol oder Mischungen davon. Insbesondere enthält oder besteht der Polyolstrom aus 1,4-Butandiol.

Bevorzugt weist der Monomerstrom A eine Temperatur von 20 bis 80°C und unabhängig hiervon der Monomerstrom B eine Temperatur von 35 bis 80°C auf. Die Massenströme des Polyisocyanatstroms und des Polyolstroms werden so eingestellt, dass der Isocyanat-Index im Mischungsstrom von 0,50 bis 0,95, bevorzugt von 0,75 bis 0,85, beträgt.

Der Monomerzuführungsstrom F kann identisch zu den vorstehend beschriebenen Monomerströmen A oder B sein, bevorzugt zu A. Alternativ kann er Monomere enthalten oder daraus bestehen, die von den Monomerströmen A und B verschieden sind, jedoch mit dem Polymer im Polymerstrom E reagieren können.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, verstanden:

$$\text{Kennzahl} = (\text{Mole Isocyanat-Gruppen} / \text{Mole Isocyanat-reaktive Gruppen})$$

Der NCO-Wert (auch: NCO-Gehalt, Isocyanatgehalt) wird bestimmt mittels EN ISO 11909:2007. Falls nicht anders angegeben, handelt es sich um die Werte bei 25°C.

Im Rücklaufstrom bzw. Polymerstrom E spielt die Verzweigung bei der Form der Molekulargewichtsverteilung wegen des geringen Gewichtsmittels eine untergeordnete Rolle.

Bei der weiteren Umsetzung des Polymerstroms E ist es bevorzugt, dass man weit genug von der kritischen Grenze der Gelbildung entfernt bleibt, das Polymer im Polymerstrom E also für weitere Aufkondensation geeignet ist. Beispielsweise wird dies durch eine ideale Extrapolation auf ein Endmolekulargewicht erreicht. Bevorzugt ist hier eine Extrapolation auf ein Endmolekulargewicht von $Mn_{end}$ = 6000 g/mol. Dieses Gewicht ist als Qualitätskriterium geeignet. Die Formel für $\alpha_{6000}$ lautet:

$$Mw_{hilf} = Mw_0 + 2* Mn_{end} *2/(Mw_{HDI} + Mw_{BDO})*(1 - Mn_0 / Mn_{end})$$

$$\rho krit_{6000} = (1 + (Mw_{hilf} + 1)* \rho) / (Mw_{hilf} - 1 - \rho)$$

$$\alpha_{6000} = \rho / \rho krit_{6000}$$

Geeignete Verzweiger im Sinne der vorliegenden Erfindungen können sowohl intern entstehende Verzweigungsstrukturen sein wie Allophanate, Biurethe oder Cyanurate bei Polyurethanen - oder Strukturen, die sich aus Fries-Umlagerungen bei Polycarbonaten ergeben, als auch externe, dem Monomerstrom zugesetzte Verzweiger. Dies sind beispielsweise bei den Alkoholen (Polyolen) tri- bzw. tetrafunktionelle Alkohole. Entsprechend können im Monomerstrom der Isocyanate beispielsweise Cyanurate oder andere tri- bzw. tetrafunktionelle Isocyanate zugegeben werden. Gegebenenfalls können noch höherfunktionale Monomere oder Präpolymere oder Mischungen verschiedenwertiger funktionaler Monomere oder Präpolymere verwendet werden. Bevorzugt sind die zugesetzten Verzweiger jedoch auf eine Funktionalität von 3 oder 4 begrenzt. Diese Einschränkung der Funktionalität gilt auch für die oben erwähnten Beispiele von Verzweigern, die sich während der Reaktion durch chemische Prozesse bilden.

Werden Polyurethane als Polymer erhalten, so beträgt die Temperatur des Rücklaufstroms (D) vorzugsweise 160 bis 200 °C, stärker bevorzugt 170 bis 190 °C.

Bei der weiteren Reaktion des Polymerstroms (E) im Reaktor, bevorzugt mit enger Verweilzeitverteilung, insbesondere Extruder, ergeben sich die mittleren Molekulargewichte hier mit $Mn_{Ext}$ und $Mw_{Ext}$ bezeichnet bevorzugt aus den mittleren Molekulargewichten im Loop zunächst ohne Verzweigung:

$$Mn_{0,Ext} = 1/(1-KZ2)$$

$$Mw_{0,Ext} = Mw_0 + 2*(KZ2-KZ1)/(1-KZ1)* Mn_{0,Ext}$$

Durch Verzweigungen werden Anzahl- und Gewichtsmittel entsprechend modifiziert:

$$Mn = Mn_{v,Ext} = Mn_{0,Ext}/(1-(f-2)*\rho/2* Mn_{0,Ext})$$

$$Mw = Mw_v = Mw_0 (1+\rho) / (1-(f-2)*\rho (Mw_0-1)).$$

In einer Ausführungsform beträgt der Allophanatgehalt der erhaltenen Polymere oder Prepolymere in mol% bevorzugt 0,2 bis 1,0, stärker bevorzugt 0,21 bis 0,85, noch stärker bevorzugt 0,5 bis 0,77.

In einer Ausführungsform beträgt Mn der Polymere im Polymerstrom E oder der Polymere G bevorzugt 1.000 bis 10.000 g/mol, stärker bevorzugt 1.100 bis 8.000 g/mol und/oder der Mw 8.000 bis 120.000, stärker bevorzugt 10,000 bis 100.000 g/mol.

In einer Ausführungsform beträgt die Polydispersität pd, also das Verhältnis der gewichtsgemittelten und der anzahlgemittelten Molekularmassen, bevorzugt 2,0 bis 20,0, stärker bevorzugt 4,0 bis 18,0, noch stärker bevorzugt 6,5 bis 17,0.

In einer Ausführungsform beträgt die Mp in g/mol bevorzugt 8.000 bis 50.000, stärker bevorzugt 9.500 bis 35.000.

In einer Ausführungsform beträgt Fratio in kg/kg bevorzugt 5,0 bis 35,0, stärker bevorzugt 8 bis 20,0, am stärksten bevorzugt 10,0 bis 17,0.

In einer Ausführungsform beträgt $\alpha$ bevorzugt 0,2 bis 0,7, stärker bevorzugt 0,3 bis 0,5.

In einer Ausführungsform beträgt der $F_{recycle}$ Wert in kg/h bevorzugt 50 bis 500, stärker bevorzugt 60 bis 350, insbesondere 80 bis 320.

In einer Ausführungsform beträgt die Produkttemperatur im Loop an unterschiedlichen Positionen zwischen 160°C und 200°C, bevorzugt zwischen 170°C und 190°C.

In einer Ausführungsform beträgt die Produkttemperatur im Extruder zwischen 160°C und 260°C, bevorzugt zwischen 170°C und 250°C.

Beschreibung der Zeichnung:

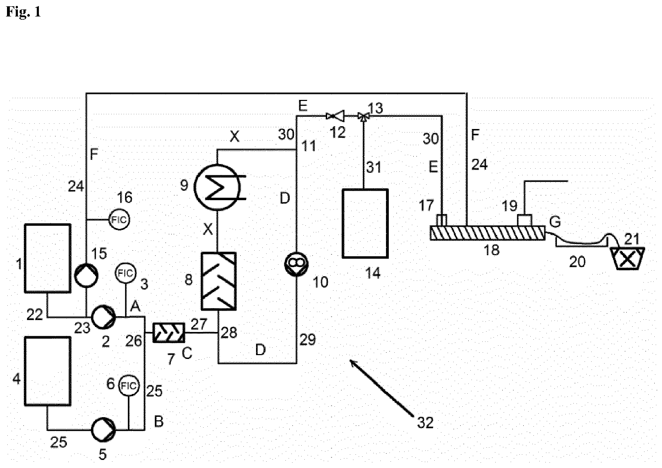

In Fig. 1 ist eine Vorrichtung 32 zur Herstellung von thermoplastischem Polyurethan nach einem Referenzverfahren abgebildet. Die Vorrichtung umfasst einen Monomer-A-Vorratsbehälter 1, von dem eine Monomer-A-Leitung 22 zur Förderung eines Monomerstroms A abgeht, die in einer ersten Mischungseinrichtung 7 mündet.

An der Monomer-A-Leitung 22 ist eine erste Einmündung 23 angeordnet, an der von Monomerstrom A ein Monomer-A-Zuführungsstrom F als Teilstrom abgeteilt wird und in einer Monomer-A-Zuführungsleitung 24 geführt wird. Die Monomer-A-Zuführungsleitung 24 setzt an der ersten Einmündung 23 an und mündet in einen Extruder 18. Der Monomer-A-Zuführungsleitung 24 ist eine dritte Fördereinrichtung 15 zur Förderung von Monomer-A-Zuführungsstrom F angeordnet und an der Monomer-A-Zuführungsleitung ist ein dritter Massendurchflussmesser 16 angeschlossen.

Der Monomer-A-Leitung 22 ist stromabwärts der ersten Einmündung 23 eine erste Fördereinrichtung 2 zur Förderung von Monomerstrom A angeordnet. An die Monomer-A-Leitung 22 ist ein erster Massendurchflussmesser 3 angeschlossen. Zwischen der ersten Fördereinrichtung 2 und der ersten Mischungseinrichtung 7 ist eine zweite Einmündung 26 in der Monomer-A-Leitung 22 angeordnet.

Des Weiteren umfasst die Vorrichtung 32 einen Polyol-Vorratsbehälter 4, von dem eine Polyolleitung 25 zur Förderung eines Polyolstroms B abgeht und in die zweite Einmündung 26 mündet. An der Polyolleitung 25 ist eine zweite Fördereinrichtung 5 angeordnet und ein zweiter Massendurchflussmesser 6 angeschlossen.

Stromabwärts der zweiten Einmündung 26 mündet die Isocyanatleitung 22 in die erste Mischungseinrichtung 7. Von der ersten Mischungseinrichtung 7 geht eine Kreislaufzuführungsleitung 27 ab, die in der dritten Einmündung 28 mündet. In der Kreislaufzuführungsleitung 27 wird ein Mischungsstrom C gefördert, der aus der ersten Mischungseinrichtung 7 austritt und an der dritten Einmündung 28 einen Rücklaufstrom D geleitet wird unter Bildung des Kreislaufstroms X. Der Rücklaufstrom D wird in einer Kreislaufleitung 29 in einem Kreislauf geführt, wobei gleichzeitig die Komponenten des Rücklaufstroms D mit den Komponenten des Mischungsstroms C chemisch umgesetzt werden. Die Kreislaufleitung 29 umfasst in Strömungsrichtung eine zweite Mischungseinrichtung 8, eine temperierbare Mischungseinrichtung 9 sowie eine temperierbare Fördereinrichtung 10. Von dem Rücklaufstrom D wird an einer vierten Einmündung 11 ein Polymerstrom E als Teilstrom abgeteilt. Die vierte Einmündung 11 ist zwischen der temperierbaren Mischungseinrichtung 9 und der temperierbaren Fördereinrichtung 10 vorgesehen. Von der vierten Einmündung 11 geht eine Polymerzuführungsleitung 30 zur Förderung von Polymerstrom E ab, die einlassseitig im Extruder 18 mündet. In der Polymerzuführungsleitung 30 ist ein Druckregelventil 12 zur Regulierung des Drucks von Polymerstrom E vorgesehen. Stromabwärts des Druckregelventils 12 ist in der Polymerzuführungsleitung 30 ein Dreiwegeventil 13 positioniert, von dem eine Abfallleitung 31 abgeht, die in einen Abfallbehälter 14 mündet.

Über die Abfallleitung 31 kann der Polymerstrom E bei Inbetriebnahme, Außerbetriebnahme oder Störung der Vorrichtung 32 ganz oder teilweise in den Abfallbehälter 14 geführt werden. Des Weiteren umfasst die Vorrichtung eine an der Einmündung der Polymerzuführungsleitung 30 in den Extruder 18 angeordnete Entlüftungseinrichtung 17 zur Entfernung von Gasen und gasförmigen Nebenprodukten aus dem Polymerstrom E. In Extruderarbeitsrichtung stromabwärts der Polymerzuführungsleitung 30 wird über die Monomer-A-Zuführungsleitung 24 der Monomer-A-Zuführungsstrom F in den Extruder 18 geleitet.

Der Extruder 18 ist zur Umsetzung der Komponenten des Polymerstroms E mit den Komponenten des Monomer-A-Zuführungsstroms F zu einem Polymer G geeignet. Dem Extruder 18 ist ein Entgasungsschacht 19 zur Entfernung von Gasen und gasförmigen Nebenprodukten mittels Unterdruck von 50 mbar bis 800 mbar unter Normaldruck aus dieser Umsetzung zugeordnet, der stromabwärts der Einleitung des Monomer-A-Zuführungsstroms (F) und im in Extruderarbeitsrichtung letzten Drittel des Extruders 18 angeordnet ist. Hinter dem Auslass des Extruders 18 ist eine Kühlungseinrichtung 20 angeordnet zur Abkühlung des thermoplastischen Polyurethans G unter seinen Schmelzpunkt. An die Kühlungseinrichtung 20 schließt sich eine Zerkleinerungseinrichtung 21 zur Zerkleinerung des abgekühlten thermoplastischen Polyurethans G an.

## Abkürzungen und Definitionen

| HDI | 1,6-Hexamethylendiisocyanat |
| --- | --- |
| BDO | 1,4-Butandiol |
| FBDO: | Monomerstrom B, insbesondere Eingangsstrom BDO, in kg/h |
| FHDI: | Monomerstrom A, insbesondere Eingangsstrom HDI, in kg/h (entspricht dem im Unterschuss zugegebenen Monomer = $FBDO * KZ1 * Mw_{HDI}/Mw_{BDO}$) |
| $F_{recycle}$: | Rücklaufstrom in den Loop in kg/h, (insbesondere Strom D bei Apparat 10, der Pumpe (der Strom X in Apparat 8: X = D +FBDO+FHDI) in kg/h) |
| Fratio | Verhältnis Massenstrom des Rücklaufstroms zur Summe der Massenströme der Monomere A und B ($F_{ratio}$ = $F_{recycle}$ / (FBDO + FHDI)) in (kg/h)/(kg/h) |
| $F_0$ | Fratio*(1-Kz) |
| Allo: | Allophanat Bestimmung durch 1-H NMR |
| a: | Verhältnis Allophanat-Peak zu Urethan-Peak (mol/mol) |
| x: | Verhältnis Peak OH-Endgruppen zu Urethan-Peak (mol/mol) |
| f: | Funktionalität der Verzweigung (f=3 oder f=4) |
| MGV | Molekulargewichtsverteilung |

Die folgenden genannten Molekulargewichte $Mn_0$, $Mn_v$, $Mw_0$, $Mw_v$, $Mw_{GPC}$ und $Mw_u$ sind in Zahl der Monomereinheiten - d.h. sowohl der AA als auch der BB Monomer - angegeben. Die Molekulargewichte können noch die Subskripte Ext (Reaktor, insbesondere Extruder) bzw. Loop (Rücklaufstrom) tragen, um diese im jeweiligen Verfahrensschritt anzuzeigen.

| $Mn_0$ | Anzahlmittel der MGV ohne Verzweigungen oder das sich ohne Verzweigungen einstellen würde |
| --- | --- |
| $Mn_v$ | Anzahlmittel der MGV im Fall von Verzweigungen |
| $Mw_0$ | Gewichtsmittel der MGV das sich ohne Verzweigungen einstellen würde |
| $Mw_v$ | Gewichtsmittel der MGV korrigiert für Verzweigungen |
| $Mw_{GPC}$ | Gewichtsmittel der MGV korrigiert für Verzweigungen und Gyrationsradius, also das theoretische Molekulargewicht, das man theoretische aus einer GPC-Messung erhalten würde. |
| $M_{Wu}$ | Gewichtsmittel der Molekulargewichtsverteilung aus der GPC (Messung) in Zahl der Monomereinheiten |

Die folgenden Molekulargewichte Mw, Mp, $Mn_{end}$, $Mw_{HDI}$ und $Mw_{BDO}$ sind in g/mol angegeben.

| Mn | Anzahlmittel der MGV aus 1-H NMR, in diesem Fall ist die Verzweigung mit berücksichtigt |
| --- | --- |
| Mw | Gewichtsmittel der MGV aus GPC |

Mp      Peak Molekulargewicht aus GPC

pd      Mw/Mn aus GPC / NMR

$Mn_{end}$      Gewünschtes Anzahlmittel des Endmolekulargewichts bei Kettenverlängerung

$Mw_{HDI}$      Molekulargewicht des Monomers A insbesondere HDI

$Mw_{BDO}$      Molekulargewicht des Monomers B insbesondere BDO

KZ1      Molverhältnis der Monomerströme A zu B: insbesondere Isocyanat-Index von HDI zu BDO im Loop

KZ2      Molverhältnis der Monomerströme (A+F) zu B (insbesondere Isocyanat-Index von HDI zu BDO im Extruder (Summe der beiden HDI Dosierungen))

pp      =(KZ2-KZ1)/(1-KZ1) Umsatz der nach dem Loop verbleibenden im Überschuss zugegebenen funktionellen Gruppen

$\rho$      Verzweigungsdichte = Verzweigungen / eigebauter Monomereinheit [mol/mol] Beispielsweise gilt $\rho$=a für Allophanate, da diese eine Funktionalität von 3 haben.

Im Falle von Verzweigern mit einer anderen Funktionalität gilt $\rho$=(f-2)*a.

$$\rho_{kritisch} = (1+ \rho + \rho\, Mw_u)/( Mw_u -1- \rho)$$

$\alpha$      $\rho$ / $\rho_{kritisch}$

Das Molekulargewicht einer Einheit ist der Durchschnitt aus dem Molekulargewicht der Monomere A und B (insbesondere BDO und HDI). Um das Gewichtsmittel in Anzahl der Monomereinheiten zu erhalten, muss Mw aus der GPC durch das mittlere Molekulargewicht einer Monomereinheit dividiert werden.

## Messungen

1-H NMR:

Die Messungen wurde mit einem Bruker AV III HD 600 Spektrometer bei 600 MHz durchgeführt.

Folgende Peaks wurden ausgewertet:

U1      $CH_2$-NH      2.98 ppm      $CH_2$ bei Urethan

OH1      $CH_2$-OH      3.43 ppm      $CH_2$ bei OH-Gruppen

U2      NH      6.6 ppm      Urethan

Allo      N-H      8.3-8.4 ppm      Allophanat

Daraus wurden folgende Verhältnisse gebildet:

$$a = Allo/U2 \text{ (Allophanat / Unrethan-gruppen mol/mol)}$$

$$x = OH1/U1 \text{ (Verhältnis OH-Endgruppen / Urethangruppen mol/mol)}$$

Lösungsmittel: DMSO-D6 bei 80°C

GPC:

Die Molmassen der Polymere wurden mit Hilfe einer Gelpermeationschromatographie (GPC) bestimmt. Dazu wurde die zu vermessende Probe in einer Lösung von 3 g Kaliumtrifluoracetat in 400 Kubikzentimeter Hexafluorisopropanol aufgelöst (Probenkonzentration ca. 2 mg/Kubikzentimeter). Die jeweiligen GPCs wurden mit folgenden Komponenten bei einer Flussrate von 1 Kubikzentimeter/Minute gemessen:

Pumpe:      HPLC-Pumpe 515 (Waters GmbH)

Detektor:      Smartline RI-Detektor 2300 (Knauer Wissenschaftliche Geräte GmbH)

(fortgesetzt)

| Säulen: | 1 Vorsäule, 1000 Å PSS PFG 7 $\mu$m, 300 Å PSS PFG 7 $\mu$m, 100 Å PSS PFG 7 $\mu$m in der angegebenen Reihenfolge |
| Entgasung: | Degaser PSS (Polymer Standards Service GmbH) |
| Injektionsvolumen: | 100 Mikroliter |
| Temperatur: | 23 - 25 °C |
| Molmassen-Standard: | Polymethylmethacrylat-Standard-Kit (PSS Polymer Standards Service GmbH) |

Die GPC liefert neben der vollständigen Verteilung die Mittelwerte Mn, Mw und Mz sowie das Peak Molekulargewicht Mp.

Mn wurde aus dem eingesetzten Verhältnis KZ von A / B bzw. A+F / B, insbesondere HDI / BDO, und den NMR Daten nach folgender Formel ermittelt:

$$Mn = \{M_{WHDI}*Kz*(1+x) + M_{WBDO}*(1+x)\}/ \{(1+x)*Kz -1+x-a\}$$

Mw: wurde direkt aus den GPC-Daten ermittelt.

**Beispiele**

In den folgenden Beispielen wurde ein Polymer mit dem erfindungsgemäßen Verfahren (ohne weitere Umsetzung in einem Extruder) und mit einem nicht-erfindungsgemäßen Verfahren dargestellt. In einigen Beispielen wurde das erhaltene (Pre-)Polymer weiter in einem Extruder zu einem finalen Polymer umgesetzt.

Nur wenn das Polymer in einem Extruder umgesetzt wurde, ist in den folgenden Tabellen der Wert "KZ 2" angegeben.

Die in den folgenden Tabellen angegebenen Werte für Mn, Mw und Mp wurden jeweils am Ende der Synthese ermittelt, also bei den Polymeren nach Beendigung des Kreislaufverfahrens und bei den finalen Polymeren, die in einem Extruder umgesetzt wurden, nach der Umsetzung im Extruder. Die Temperaturangabe in den folgenden Tabellen bezieht sich jeweils auf die Temperatur im Kreislaufstrom.

Die folgenden Beispiele wurden mit dem nachfolgend, allgemein beschriebenen Verfahren durchgeführt. Die Temperatur im Kreislauf, der jeweilige Isocyanatindex sowie die Rücklaufrate im Kreislauf wurden bei den einzelnen Beispielen entsprechend den Angaben in den folgenden Tabellen eingestellt.

**Darstellung eines Polymers**

Aus einer 250 - Liter - Vorlage 1 für 1,6-Hexamethylendiisocyanat wurde mit Hilfe einer Zahnringpumpe 2 (Firma HNP, MZR 7255) ein Polyisocyanatstrom als Monomerstrom A bestehend aus 1,6-Hexamethylendiisocyanat zu einem Statikmischer 7 gefördert. Der Durchsatz des Polyisocyanatstroms wurde mittels eines Massendurchflussmessers 3 (Firma Bronkhorst, Mini Cori-Flow M1X, max. Durchfluss 12 kg/h) gemessen. Die Temperatur des 1,6-Hexamethylendiisocyanats betrug dabei Raumtemperatur.

Aus einer 250 - Liter - Vorlage 4 für 1,4-Butandiol wurde mit Hilfe einer Zahnringpumpe 5 (Firma HNP, MZR 7205) ein Polyolstrom als Monomerstrom B bestehend aus 1,4-Butandiol zum Statikmischer 7 gefördert. Der Durchsatz des Polyolstroms wurde mittels eines Massendurchflussmessers 6 (Firma Bronkhorst, Mini Cori-Flow M1X, max. Durchfluss 8 kg/h) gemessen. Die Temperatur des 1,4-Butandiols betrug 40 °C.

In dem Statikmischer 7 (Sulzer SMX, Durchmesser 6 mm, Verhältnis von Länge zu Durchmesser L/D = 10) wurden der Polyisocyanatstrom und der Polyolstrom miteinander gemischt, so dass ein Mischungsstrom C erhalten wurde. Die Massenströme des Polyisocyanatstroms und des Polyolstroms wurden auf den unten angegebenen Index des jeweiligen Beispiels eingestellt.

Der Mischungsstrom C wurde über eine Einmündung 28 in die Kreislaufleitung 29 geleitet, in der mit dem rückgeführten Rücklaufstrom D in einem Kreislauf geführt wurde, wobei sich der Strom X ergab stromabwärts der Einmündung 28 wurde der Kreislaufstrom X in einen Statikmischer 8 (Statikmischer äquivalent zu Sulzer SMX, Innendurchmesser 34 mm, L/D=20) geführt. Die Temperatur des Kreislaufstromes X wurde auf die jeweilige Temperatur eingestellt.

Stromabwärts des Statikmischers 8 wurde der Kreislaufstrom X in einen temperierbaren statischen Mischer 9 geführt. Dort fand die Reaktion der Monomere, die aus dem Mischungsstrom C stammten, untereinander bzw. mit den Molekülen, die aus dem Rücklaufstroms D stammten, zum großen Teil statt und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern und eine Wärmeaustauschfläche von 0,44 Quadratmeter. Er war mit Wärmeträgeröl beheizt / gekühlt.

Aus dem temperierbaren statischen Mischer 9 trat der Kreislaufstrom X aus. Stromabwärts des temperierbaren statischen Mischers 9 wurde an einer Einmündung 11 ein Polymerstrom E aus dem Kreislaufstrom X abgeteilt und der restliche Rücklaufstrom D weiter zu einer Zahnradpumpe 10 geführt. Der Polymerstrom E wurde in einen Extruder 18 geleitet, sofern das Polymer in dem jeweiligen Beispiel weiter im Extruder umgesetzt wurde.

Der Druck des Rücklaufstroms D wurde an einer Zahnradpumpe 10 erhöht. Die Zahnradpumpe 10 (Firma Witte Chem 25,6-3) hatte ein Volumen pro Umdrehung von 25,6 Kubikzentimeter und eine Drehzahl von 50 pro Minute. Der Rücklaufstrom D wurde stromabwärts der Pumpe an Einmündung 28 mit Mischungsstrom C vereinigt, wie bereits beschrieben.

Die Kreislaufleitung 29 bestand aus doppelwandig ausgeführten Rohrleitungen, die mit Thermoöl beheizt waren. Der Statikmischer 8, der temperierbare statische Mischer 9 und die Zahnradpumpe 10 bestanden aus Apparaten, die mit Thermoöl beheizt waren.

**Weitere Umsetzung des Polymers**

Die weitere Umsetzung des Polymers wurde als Reaktivextrusion in einem Extruder 18 bei einer Temperatur von 200 °C und einer Drehzahl von 66 Umdrehungen pro Minute durchgeführt. Der Extruder 18 war ein ZSK 26 MC der Firma Coperion, mit einem Schneckendurchmesser von 26 mm und einem Länge zu Durchmesser Verhältnis von 36 bis 40.

An dem Extruder 18 befand sich eine Entlüftung 17, die bei ca. 1 mbar Unterdruck gegenüber dem Normaldruck betrieben wurde und in der der Polymerstrom E von eventuell mit dem Polyisocyanatstrom und dem Polyolstrom eingeschleppten Inertgasen und möglichen gasförmigen Reaktionsprodukten befreit wurde.

Aus Vorlage 1 wurde mit Hilfe einer Mikrozahnringpumpe 15 (MZR 6355 der Firma HNP) ein Isocyanatzuführungsstrom F bestehend aus 1,6-Hexamethylendiisocyanat entnommen. Der Durchsatz des Isocyanatzuführungsstroms als Monomerstrom F wurde mittels eines Massendurchflussmessers 16 (Firma Bronkhorst, Mini Cori-Flow, M1X, maximaler Durchfluss 2 kg/h) gemessen. Die Temperatur des 1,6-Hexamethylendiisocyanat betrug Raumtemperatur. Der Isocyanatzuführungsstrom als Monomerstrom F wurde stromabwärts des Prepolymerstroms E in den Extruder 18 geleitet. In dem Extruder 18 wurde der Prepolymerstrom E mit dem Isocyanatzuführungsstrom als Monomerstrom F bei dem unten angegebenen Isocyanatindex des jeweiligen Beispiels zu einem thermoplastischen Polyurethan G umgesetzt.

Am in Durchflussrichtung betrachtet letzten Drittel des Extruders 18 war eine Entgasung 19 angeordnet, an der das thermoplastische Polyurethan als Polymer G bei 200 mbar unter Normaldruck mit Hilfe eines Vakuumdoms, der auf einem Entgasungsschacht des Extruders angeordnet war, von flüchtigen Bestandteilen befreit wurde. Das thermoplastische Polyurethan als Polymer G wurde nach dem Austritt aus dem Extruder 18 durch zwei Düsen in einem mit deionisierten Wasser (VE-Wasser) gefüllten Wasserbad 20 abgekühlt und durch einen Granulator 21 zu Granulat zerschnitten.

**Beispiele für die Einstellung der Molekulargewichtsverteilung des Polymers im Kreislaufverfahren**

Tabelle 1:

|  | Erfindungsgemäß | | | | | | | |
|---|---|---|---|---|---|---|---|---|
|  | 1 | 2 | 3 | 4 | 5 | 6 | 7 | 8 |
| Allo [mol%] | 0,50 | 0,51 | 0,61 | 0,75 | 0,49 | 0,39 | 0,85 | 0,67 |
| Mn [g/mol] | 1191 | 1159 | 1184 | 1646 | 1160 | 883 | 1184 | 1124 |
| Mw [g/mol] | 14830 | 19230 | 21180 | 33030 | 14130 | 10170 | 12890 | 8901 |
| pd (Mw/Mn) | 12,4 | 16,6 | 17,9 | 20,0 | 12,2 | 11,5 | 10,9 | 7,92 |
| Mp [g/mol] | 8912 | 10351 | 9885 | 13489 | 10725 | 7586 | 10115 | 8128 |
| KZ 1 (Loop) | 0,80 | 0,80 | 0,80 | 0,85 | 0,80 | 0,75 | 0,80 | 0,80 |
| FBDO [kg/h] | 4 | 4 | 4 | 2 | 2 | 4 | 4 | 2 |
| FHDI [kg/h] | 5,97 | 5,97 | 5,97 | 3,17 | 2,99 | 5,6 | 5,98 | 2,97 |

(fortgesetzt)

|  | Erfindungsgemäß | | | | | | | |
|---|---|---|---|---|---|---|---|---|
|  | 1 | 2 | 3 | 4 | 5 | 6 | 7 | 8 |
| $F_{recycle}$ [kg/h] | 80 | 160 | 320 | 80 | 80 | 160 | 160 | 80 |
| Temp. [°C] | 190 | 190 | 190 | 190 | 190 | 190 | 210 | 210 |
| Fratio [kg/kg] | 8,02 | 16,05 | 32,10 | 15,46 | 16,05 | 16,67 | 16,05 | 16,05 |
| $\rho_{kritisch}$[mol%] | 1,38 | 1,19 | 1,23 | 1,14 | 1,41 | 1,68 | 1,87 | 2,15 |
| $\alpha$ | 0,36 | 0,42 | 0,48 | 0,65 | 0,34 | 0,23 | 0,45 | 0,31 |
| $\alpha_{6000}$ | 0,73 | 0,81 | 0,95 | 1,16 | 0,71 | 0,54 | 1,09 | 0,82 |

Für das Beispiel 6 sind hier noch die Verhältnisse $\alpha$ für verschiedene Endmolekulargewichte angegeben:

$\alpha_{4000}$ = 0,42

$\alpha_{6000}$ = 0,54

$\alpha_{10000}$ = 0,78.

Die Beispiele 1 bis 3 zeigen, dass eine Änderung des Verhältnisses des Rücklaufsstroms in den Rücklaufstrom D zur Summe der Monomerströme A und B zu einer breiteren Verteilung des Molekulargewichts führt, wobei das zahlengemittelte Molekulargewicht in den Beispielen nur unwesentlich voneinander abweicht.
Sofern durch das erfindungsgemäße Verfahren ein Polyurethan dargestellt wird, kann bei ansonsten weitgehend gleichen Reaktionsbedingungen auch die Kennzahl der Monomerströme A und B die Verteilung des Molekulargewichts beeinflussen, wie anhand der Beispiele 4 bis 6 erkennbar ist.
Beim Vergleich der Polymere aus den Beispielen 5 und 7 sowie 2 und 8 ist erkennbar, dass bei ansonsten weitgehend gleichen Bedingungen eine Erhöhung der Temperatur auf über 200°C zu einer relevante Rückreaktion im Loop führt, die zu eine verminderte Breite der Verteilung der Molekulargewichte (pd) führt.

**Beispiele für die Einstellung der Molekulargewichtsverteilung bei weiterer Umsetzung des Polymers im Extruder und Nachdosierung eines Monomers**

Bei den in Tabelle 2 gezeigten Beispielen wurde das Polymer weiter in einem Extruder umgesetzt, wobei zusätzliches Monomer hinzudosiert wurde.
Die Beispiele 9 und 10 zeigen, dass sich das Verhältnis des Rücklaufstroms zur Summe der Massenströme A und B auch dann auf die Verteilung des Molekulargewichts auswirkt, wenn bei einer weiteren Umsetzung des Polymers noch zusätzliches Monomer hinzudosiert wird.
Das Molekulargewicht und die Polydispersität können aber auch durch die Menge der Nachdosierung des Monomers beeinflusst werden, also die KZ 2. Anhand der Beispiele 11 und 12 ist erkennbar, dass die Breite der Verteilung sich ohne Verzweigung nach der empirischen Formel

$$pd_{Ext} = Mw_{Loop}*(1\text{-}KZ2)+ 2*(KZ2\text{-}KZ1)/(1\text{-}KZ1)$$

verringert. Eine gewünschte Breite der Verteilung der Molekulargewichte kann also auch durch eine Auswahl der KZ 1und KZ 2 erzielt werden.

Tabelle 2:

|  | Erfindungsgemäß | | | |
|---|---|---|---|---|
|  | 9 | 10 | 11 | 13 |
| Allo [mol%] | 0,53 | 0,56 | 0,63 | 0,75 |
| Mn [g/mol] | 4538 | 9028 | 7163 | 6754 |

(fortgesetzt)

|  | Erfindungsgemäß | | | |
|---|---|---|---|---|
|  | 9 | 10 | 11 | 13 |
| Mw [g/mol] | 31690 | 39780 | 61370 | 53080 |
| pd (Mw/Mn) | 6,98 | 4,41 | 8,56 | 7,86 |
| Mp [g/mol] | 22646 | 21174 | 35075 | 31989 |
| KZ 1 (Loop) | 0,80 | 0,78 | 0,80 | 0,80 |
| KZ 2 (Extr.) | 0,99 | 0,99 | 0,98 | 0,98 |
| FBDO [kg/h] | 3 | 2 | 2 | 2 |
| FHDI [kg/h] | 4,48 | 2,91 | 2,97 | 2,97 |
| $F_{recycle}$ [kg/h] | 80 | 80 | 80 | 80 |
| Temp. [°C] | 182 | 180 | 185 | 190 |
| Fratio [kg/kg] | 10,69 | 16,29 | 16.05 | 16,05 |
| $\rho_{kritisch}$[mol%] | 0,941 | 0,886 | 0,832 | 0.995 |
| $\alpha$ | 0,563 | 0,631 | 0,748 | 0,753 |

**Einfluss der Rücklaufrate und Temperatur auf die Gelbildung**

Tabelle 3:

|  | Erfindungsgemäß | | Referenz | | | |
|---|---|---|---|---|---|---|
|  | 15 | 16 | 17 | 18 | 12 | 14 |
| Allo [mol%] | 0,68 | 0,21 | 0,80 | 1,05 | 0,71 | 0,77 |
| Mn [g/mol] | 4458 | 1104 | 1450 | 6086 | 9290 | 6010 |
| Mw [g/mol] | 43380 | 14450 | 25017 | 118480 | 114700 | 98260 |
| pd (Mw/Mn) | 9,73 | 13,08 | 17,25 | 19,42 | 12,34 | 16,3 |
| Mp [g/mol] | 26303 | 12023 | 12161 | 20653 | 46238 | 33497 |
| KZ 1 (Loop) | 80 | 80 | 83 | 83 | 0,80 | 0,80 |
| KZ 2 (Extr.) | 98 | - | - | 98 | 0,985 | 0,99 |
| FBDO [kg/h] | 4 | 2 | 4 | 4 | 2 | 4 |
| FHDI [kg/h] | 5,97 | 2,97 | 5,97 | 5,97 | 2,97 | 5,97 |
| $F_{recycle}$ [kg/h] | 80 | 80 | 480 | 480 | 80 | 160 |
| Temp. [°C] | 185 | 185 | 200 | 200 | 185 | 190 |
| Fratio [kg/kg] | 8,02 | 16,05 | 48,14 | 48,14 | 16,05 | 16,05 |
| $\rho_{kritisch}$[mol%] | 0,982 | 1,13 | 1,32 | 1,16 | 0,823 | 0,903 |
| $\alpha$ | 0,69 | 0,19 | 0,60 | 0,90 | 0,862 | 0,853 |
| $\alpha_{6000}$ |  | 0,35 | 1,17 | - | - | - |

Das erfindungsgemäße Beispiel 15 (Endpolymer) zeigte gute Granulierbarkeit. Das Präpolymer Beispiel 16 zeigt einen so geringen Allophanatgehalt, so dass es (bei gegebener Breite) zur weiteren Aufkondensation bis Mn 15000 g/mol ($\alpha_{15000}$ = 0,64) ohne Gelbildung geeignet ist.

Die Polymere der Referenzbeispiele 12, 14, 17 und 18, in welchen die kritische Verzweigungsdichte überschritten ist, zeigten Gelklumpen, so dass eine Granulierbarkeit nicht gegeben war. Referenzbeispiel 17 zeigte eine Kombination aus hohem Mw und hoher Verzweigungskonzentration, die eine weitere Aufkondensation ohne Gelbildung nicht möglich macht.

**Bezugszeichenliste**

| A | Monomerstrom A |
| B | Monomerstrom B |
| C | Mischungsstrom |
| D | Rücklaufstrom |
| E | Polymerstrom |
| F | Monomer-A-Zuführungsstrom |
| G | Polymer |
| X | Kreislaufstrom |
| 1 | Isocyanat-Vorratsbehälter |
| 2 | erste Fördereinrichtung |
| 3 | erster Massendurchflussmesser |
| 4 | Polyol-Vorratsbehälter |
| 5 | zweite Fördereinrichtung |
| 6 | zweiter Massendurchflussmesser |
| 7 | erste Mischungseinrichtung |
| 8 | zweite Mischungseinrichtung |
| 9 | temperierbare Mischungseinrichtung |
| 10 | temperierbare Fördereinrichtung |
| 11 | vierte Einmündung |
| 12 | Druckregelventil |
| 13 | Dreiwegeventil |
| 14 | Abfallbehälter |
| 15 | dritte Fördereinrichtung |
| 16 | dritter Massendurchflussmesser |
| 17 | Entlüftungseinrichtung |
| 18 | Extruder |
| 19 | Entgasungsschacht |
| 20 | Kühlungseinrichtung |
| 21 | Zerkleinerungseinrichtung |
| 22 | Monomer-A-Leitung |
| 23 | erste Einmündung |
| 24 | Monomer-A-Zuführungsleitung |
| 25 | Monomer-B-Leitung |
| 26 | zweite Einmündung |
| 27 | Kreislaufzuführungsleitung |
| 28 | dritte Einmündung |
| 29 | Kreislaufleitung |
| 30 | Polymerzuführungsleitung |
| 31 | Abfallleitung |
| 32 | Vorrichtung |

**Patentansprüche**

1. Ein Verfahren zur Einstellung der Molekulargewichtsverteilung eines Polymers oder Prepolymers vom Typ AA+BB in einer Polyadditionsreaktion und/ oder Polykondensationsreaktion, wobei das Verfahren die folgenden Schritte umfasst:

(a) Mischen eines Monomerstroms (A) enthaltend oder bestehend aus AA-Monomeren und eines Monomerstroms (B) enthaltend oder bestehend aus BB-Monomeren in einer ersten Mischungseinrichtung (7), so dass ein Mischungsstrom (C) erhalten wird,

(b) Einleiten des Mischungsstroms (C) in einen Rücklaufstrom (D), der in einem Kreislauf geführt wird, unter Erhaltung eines Kreislaufstroms (X);

(c) Teilung des Kreislaufstroms (X) in zwei Teilströme, von denen der erste Teilstrom als Polymerstrom (E) aus dem Kreislaufstrom (X) entnommen wird und der zweite Teilstrom als Rücklaufstrom (D) verbleibt,

wobei das Verhältnis Fratio des Massenstroms des Rücklaufstroms $F_{recycle}$ (D) zur Summe der Massenströme der Monomerströme (A) und (B) von 5 bis 35 beträgt,

das Verhältnis $\alpha$ der Verzweigungsdichte der Polymere im Polymerstrom (E) $\rho$ zu der kritischen Verzweigungsdicht $\alpha = \rho/\rho_{kritisch} < 0,8$ beträgt;

(i) das $Mn_0$ oder $Mn_v$ durch folgende Gleichungen eingestellt wird
$Mn_0 = 1/(1-KZ1)$ oder, falls Verzweiger mit der Funktionalität f anwesend sind,

$$Mn_v = Mn_0/(1-(f-2)*\rho/2* Mn_0);$$

und/oder
(ii) das $Mw_0$ oder $Mw_v$ durch folgende Gleichungen eingestellt wird

$$Mw_0 = (1-KZ1)/(1+KZ1)+8* KZ1*( F_0- KZ1+1)/(1+ KZ1)/(1+ F_0)/(1- KZ1)^2$$

oder, falls Verzweiger anwesend sind,

$$Mw_v = Mw_0 (1+\rho) / (1-(f-2)*\rho (Mw_0-1)),$$

wobei $Mn_0$ und $Mw_0$ jeweils die Anzahl- und Gewichtsmittel der Molekularverteilung sind, welche sich ohne Verzweigung einstellen würden, und $Mn_v$ und $Mw_v$ jeweils die Anzahl- und Gewichtsmittel der Molekularverteilung sind, welche sich mit Verzweigungen einstellen würden, f die Funktionalität der Verzweigung, welche gleich 3 oder 4 ist, KZ1 das Molverhältnis der Monomerströme A zu B ist, $F_0$ = Fratio*(1-KZ1) ist, Fratio das Verhältnis Massenstrom des Rücklaufstroms zur Summe der Massenströme der Monomere A und B ist und $\rho$ die Verzweigungsdichte, definiert als molarer Anteil der Verzweiger bezogen auf die Anzahl der Monomereinheiten im Polymer ist und

$$\rho_{kritisch} = \frac{(1 + \rho + \rho\, Mw_u)}{(Mw_u - 1 - \rho)}$$

ist und $Mw_u$ das durch Messung erhaltene Gewichtsmittel der Molekulargewichtsverteilung in Zahl der Monomereinheiten ist; und wobei die Einstellung der Molekulargewichte durch eine Änderung der Kennzahl KZ1 und/oder durch eine Änderung der $F_{recycle}$ erfolgt.

2. Verfahren nach Anspruch 1, **dadurch gekennzeichnet, dass** Abweichungen von Mn durch Variation der Stellgröße KZ1 und/oder von Mw durch Variation der Stellgröße $F_{recycle}$ korrigiert werden.

3. Verfahren nach Anspruch 1 oder 2, **dadurch gekennzeichnet, dass** das $M_w$ der Polymere im Polymerstrom (E) durch GPC bestimmt wird, bezeichnet als $M_{WGPC}$, und eine Korrektur der empirischen Formeln gemäß

$$Mw_{GPC} = Mw_v *(1- \rho /3*Mn_v) \qquad \text{für f=3}$$

oder

$$Mw_{GPC} = Mw_v *(1- \rho *Mn_v) \qquad \text{für f=4}$$

erfolgt.

**4.** Verfahren nach einem der vorstehenden Ansprüche, **dadurch gekennzeichnet, dass**

(i) die Reaktion irreversibel oder überwiegend irreversibel mit einer Gleichgewichtskonstante von $k_{hin}/k_{rück} >$ 10 ist; und/oder
(ii) die Polykondensation und/oder Polyaddition in homogener Phase stattfindet.

**5.** Verfahren nach einem der vorstehenden Ansprüche, **dadurch gekennzeichnet, dass** das Verhältnis Fratio des Massenstroms des Rücklaufstroms zur Summe der Massenströme der Monomerströme (A) und (B) von 5 bis 20 beträgt, bevorzugt 7 bis 17, weiter bevorzugt 10 bis 17.

**6.** Verfahren nach einem der vorstehenden Ansprüche, **dadurch gekennzeichnet, dass** der Monomerstrom (A) ein Polyisocyanat enthält oder daraus besteht; und/oder der Monomerstrom (B) ein Polyol enthält oder daraus besteht und/oder
dass die Monomerströme (A) und (B) im Wesentlichen frei von Wasser sind.

**7.** Verfahren nach einem der vorstehenden Ansprüche, **dadurch gekennzeichnet, dass** der Monomerstrom (A) mindestens ein aliphatisches, cycloaliphatisches, aromatisches oder araliphatisches Diisocyanat oder Mischungen davon enthält oder daraus besteht;
und/oder
der Monomerstrom (B) mindestens ein aliphatisches, araliphatisches, aromatisches oder cycloaliphatisches Diol oder Mischungen davon enthält oder daraus besteht.

**8.** Verfahren nach Anspruch 6 oder 7, **dadurch gekennzeichnet, dass** KZ1 im Mischungsstrom (C) von 0,50 bis 0,95 beträgt; und/oder dass $F_{ratio}$ 2 bis 200 [kg/kg] beträgt.

**9.** Verfahren nach einem der Ansprüche 6 bis 8, **dadurch gekennzeichnet, dass** der Monomerstrom (A) aus zu mindestens 85 Gew.-% aus 1,6-Hexamethylendiisocyanat oder 1,5-Pentamethylendiisocyanat besteht und/oder der Monomerstrom (B) zu mindestens 75 Gew.-% aus 1,4-Butandiol besteht und/oder die Temperatur des Rücklaufstroms (D) von 160 bis 200 °C beträgt.

**10.** Ein Verfahren zur Einstellung der Molekulargewichtsverteilung eines Polymers oder Prepolymers in einer Polyadditionsreaktion und/oder Polykondensationsreaktion vom Typ AA+BB, wobei das Verfahren die folgenden Schritte umfasst:

(a) Mischen eines Monomerstroms (A) enthaltend oder bestehend aus AA-Monomeren und eines Monomerstroms (B) enthaltend oder bestehend aus BB-Monomeren in einer ersten Mischungseinrichtung (7), so dass ein Mischungsstrom (C) erhalten wird, wobei das molare Verhältnis von Strom (A) zu Strom (B) KZ1 beträgt,
(b) Einleiten des Mischungsstroms (C) in einen Rücklaufstrom (D), der in einem Kreislauf geführt wird, unter Erhaltung eines Kreislaufstromes (X),
(c) Teilung des Stroms (X) in zwei Teilströme, von denen der erste Teilstrom als Polymer- oder Prepolymerstrom (E) aus dem Kreislauftrom (X) entnommen wird und der zweite Teilstrom als Rücklaufstrom (D) verbleibt,
wobei das Verhältnis Fratio des Massenstroms des Rücklaufstroms (D) zur Summe der Massenströme der Monomerströme (A) und (B) von 5 bis 35 beträgt,
(d) Zugabe von einem weiteren Monomerstrom (F), bevorzugt enthaltend oder bestehend aus AA-Monomeren, zu dem Strom (E), so dass das molare Verhältnis des in beiden Stufen insgesamt zugegebenen Stoffmenge des Monomers A zum Monomer B KZ2 beträgt, mit der Maßgabe, dass KZ2 > KZ1 ist,
(e) Umsetzung der Mischung in einem Reaktor mit enger Verweilzeitverteilung, bevorzugt einem Extruder, zu einem Polymerstrom (G);
wobei die Einstellung der Molekulargewichte durch eine Änderung des Verhältnisses der Kennzahlen KZ1 und KZ2 und/oder durch eine Änderung der $F_0$ Umpumprate erfolgt,
das Verhältnis $\alpha$ der Verzweigungsdichte der Polymere im Polymerstrom (E) $\rho$ zu der kritischen Verzweigungsdicht $\alpha = \rho/\rho_{kritisch} < 0,8$ beträgt; und

(i) das $Mn_{0,ext}$ oder $Mn_{v,ext}$ durch folgende Gleichung eingestellt wird

$$Mn_{0,ext} = 1/(1\text{-}KZ2)$$

oder

$$Mn_{v,ext} = Mn_0/(1-(f-2)*\rho/2* Mn_{0,ext});$$

und/oder
(ii) das $Mw_{0,ext}$ oder $Mw_{v,ext}$ durch folgende Gleichung eingestellt wird

$$pp = (KZ2-KZ1)/(1-KZ1)$$

$$Mw_{0,ext} = Mw_{0,loop}+2*pp* Mn_{0,ext}$$

beziehungsweise im Fall von Verzweigungen

$$Mw_{v,ext} = Mw_{0,ext} (1+\rho) / (1-(f-2)*\rho (Mw_{0,ext} -1))$$

wobei $Mn_{0,ext}$ das zahlengemittelte Molekulargewicht und $Mw_{0,ext}$ das Gewichtsmittel des Polymers, welche sich ohne Verzweigung einstellen würden, $Mn_{v,ext}$ und $Mw_{v,ext}$ die entsprechenden Mittelwerte unter Berücksichtigung der Verzweigung, f die Funktionalität der Verzweigung, welche gleich 3 oder 4 ist, $F_0$ = Fratio*(1-KZ1) ist, Fratio das Verhältnis Massenstrom des Rücklaufstroms zur Summe der Massenströme der Monomere A und B ist und $\rho$ die Verzweigungsdichte, definiert als molarer Anteil der Verzweiger bezogen auf die Anzahl der Monomereinheiten im Polymer ist,

$$\rho_{kritisch} = \frac{(1 + \rho + \rho\, Mw_u)}{(Mw_u - 1 - \rho)}$$

ist und $Mw_u$ das durch Messung erhaltene Gewichtsmittel der Molekulargewichtsverteilung in Zahl der Monomereinheiten ist.

**11.** Verfahren nach Anspruch 10, **dadurch gekennzeichnet, dass** Abweichungen von Mn durch Variation der Stellgröße KZ2 und/oder von Mw durch Variation der Stellgröße $F_{recycle}$ korrigiert werden und/oder bei einer definierten KZ2 Abweichungen von Mw durch Variation der Stellgröße KZ1 korrigiert werden; und/oder dass KZ2 zwischen 0,9 und 0,999 beträgt, wobei der Reaktor bevorzugt ein Extruder ist.

**12.** Verfahren nach Anspruch 10 oder 11, **dadurch gekennzeichnet, dass** die Umsetzung des Polymerstroms (E) die folgenden Schritte umfasst:

- Einleiten des Polymerstroms (E) in einen Reaktor (18),
- Einleiten eines Monomerzuführungsstroms (F) enthaltend oder bestehend aus AA-Monomeren und/oder BB-Monomeren Monomeren und/oder niedermolekularen Verbindungen, die von den AA-Monomeren und den BB-Monomeren verschieden sind, in den Reaktor (18) in Reaktorarbeitsrichtung stromabwärts der Einleitung des Polymerstroms (E),
- Umsetzen des Polymerstroms (E) mit dem Monomerzuführungsstrom (F) in dem Reaktor (18) unter Erhalt eines Polymers (G), insbesondere als Extrudat, wobei bevorzugt Gase und / oder gasförmige Nebenprodukte der Umsetzung aus dem Extruder (18) durch Anlegen eines Unterdrucks von 50 mbar bis 800 mbar unter Normaldruck mittels eines an dem Reaktor (18) angeordneten Entgasungsschachtes (19) entfernt werden,
- optional, Abkühlen des Polymers (G) unter seinen Schmelzpunkt in einer Kühlungseinrichtung (20),
- optional Zerkleinerung des Polymers (G) in einer Zerkleinerungseinrichtung (21).

**13.** Verfahren nach einem der Ansprüche 10 bis 12, **dadurch gekennzeichnet, dass** der Monomerzuführungsstrom (F) mindestens ein Polyisocyanat enthält oder daraus besteht, wobei Monomerzuführungsstrom (F) und Monomerstrom (A) bevorzugt dieselbe Zusammensetzung aufweisen.

**14.** Verfahren nach einem der Ansprüche 10 bis 13, **dadurch gekennzeichnet, dass** der Monomerzuführungsstrom (F) mindestens ein aliphatisches, cycloaliphatisches, aromatisches oder araliphatisches Diisocyanat oder Mischungen davon enthält oder daraus besteht.

15. Verfahren nach Anspruch 13 oder 14, **dadurch gekennzeichnet, dass** die Einleitung von Monomerzuführungsstrom (F) in der Weise erfolgt, dass die im Polymerstrom (E) enthaltenen Polymere und das im Monomerzuführungsstrom (F) enthaltene Polyisocyanat in einem Isocyanat-Index von 0,85 bis 1,2 vorliegen.

16. Polymer erhältlich nach einem Verfahren nach einem der Ansprüche 1 bis 15, wobei das Polymer einen Allophanatanteil von ≤ 0.75 mol-% aufweist, wobei das Polymer bevorzugt einen Allophanatanteil von ≤ 0,50 mol-%, bevorzugter von ≤ 0,30 mol-% aufweist.

17. Vorrichtung zur Durchführung eines Verfahrens nach einem der Ansprüche 1 bis 15, umfassend:

einen Monomer-A-Vorratsbehälter (1) von dem eine Monomer-A-Leitung (22) zur Förderung eines Monomerstroms (A) abgeht, die in eine erste Mischungseinrichtung (7) mündet;
einen Monomer-B-Vorratsbehälter (4) von dem eine Monomer-B-Leitung (25) zur Förderung eines Monomerstroms (B) abgeht, die in die erste Mischungseinrichtung (7) mündet, wobei die Monomer-B-Leitung (25) insbesondere stromaufwärts der ersten Mischungseinrichtung (7) mit der Monomer-A-Leitung (22) zusammengeführt wird;
eine Kreislaufzuführungsleitung (27) zur Förderung eines aus der ersten Mischungseinrichtung (7) austretenden Mischungsstroms (C), die in eine Kreislaufleitung (29) zur Förderung des Rücklaufstroms (D) und chemischen Umsetzung der Komponenten des Rücklaufstroms (D) mit den Komponenten des Mischungsstroms (C) mündet; wobei die Kreislaufleitung (29) vorzugsweise in Strömungsrichtung eine zweite Mischungseinrichtung (8), eine temperierbare Mischungseinrichtung (9) sowie eine temperierbare Fördereinrichtung (10) umfasst; und
eine von der Kreislaufleitung (29) abgehende Polymerzuführungsleitung (30) zur Förderung eines Polymerstroms (E).

18. Vorrichtung nach Anspruch 17, **dadurch gekennzeichnet, dass** die Polymerzuführungsleitung (30) einlassseitig in einen Extruder (18) mündet und die Vorrichtung die folgenden weiteren Komponenten umfasst:

ein in der Polymerzuführungsleitung (30) vorgesehenes Druckregelventil (12) zur Regulierung des Drucks des Polymerstroms (E);
ein in der Polymerzuführungsleitung (30) angeordnetes und insbesondere stromabwärts des Druckregelventils (12) positioniertes Dreiwegeventil (13), von dem eine in einen Abfallbehälter (14) mündende Abfallleitung (31) abgeht, über die der Polymerstrom (E) insbesondere bei Inbetriebnahme, Außerbetriebnahme oder Störung der Vorrichtung ganz oder teilweise in den Abfallbehälter (14) geführt werden kann;
eine vorzugsweise an der Einmündung der Polymerzuführungsleitung (30) in den Extruder (18) angeordnete Entlüftungseinrichtung (17) zur Entfernung von Gasen und gasförmigen Nebenprodukten aus dem Polymerstrom (E);
eine vom Monomer-A-Vorratsbehälter (1) oder der Monomer-A-Leitung (22) abgehende und in Extruderarbeitsrichtung vorzugsweise stromabwärts der Polymerzuführungsleitung (30) in den Extruder (18) mündende Monomer-A-zuführungsleitung (24) zur Förderung eines Monomerstroms (F);
wobei der Extruder (18) zur Umsetzung der Komponenten des Polymerstroms (E) mit den Komponenten des Monomer-A-Zuführungsstroms (F) zu einem thermoplastischen Polyurethan (G) geeignet und diesem ein Entgasungsschacht (19) zur Entfernung von Gasen und gasförmigen Nebenprodukten mittels Unterdruck aus dieser Umsetzung zugeordnet ist, wobei der Entgasungsschacht (19) bevorzugt im in Extruderarbeitsrichtung letzten Drittel des Extruders (18) angeordnet ist;
optional eine hinter dem Auslass des Extruders (18) angeordnete Kühlungseinrichtung (20), vorzugsweise ein Wasserbad, zur Abkühlung des, bevorzugt thermoplastischen, Polymers, insbesondere Polyurethans, (G) unter seinen Schmelzpunkt;
optional eine sich an die Kühlungseinrichtung (20) anschließende Zerkleinerungseinrichtung (21) zur Zerkleinerung des abgekühlten, bevorzugt thermoplastischen, Polymers, insbesondere Polyurethans (G).

**Fig. 1**

**Europäisches Patentamt**
**European Patent Office**
**Office européen des brevets**

# EUROPÄISCHER RECHERCHENBERICHT

**Nummer der Anmeldung**

EP 19 21 6783

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 598 283 A1 (BAYER AG [DE]) 25. Mai 1994 (1994-05-25) * Ansprüche 1-6; Beispiele 1-12 * * Seite 4, Zeile 54 - Seite 5, Zeile 7 * ----- | 1-18 | INV. C08G18/32 C08G18/73 C08G18/10 |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 23. März 2020 | Sütterlin, Martin |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 6783

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2020

| Im Recherchenbericht angeführtes Patentdokument | Datum der Veröffentlichung | Mitglied(er) der Patentfamilie | Datum der Veröffentlichung |
|---|---|---|---|
| EP 0598283 A1 | 25-05-1994 | EP 0598283 A1 | 25-05-1994 |
| | | JP H06206963 A | 26-07-1994 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2302564
- DE 102011085944
- EP 0598283 A
- EP 2371868 A

**In der Beschreibung aufgeführte Nicht-Patentliteratur**

- Polymerization Process Modeling. **N.A. DOTSON ; R. GALVAN ; R.L. LAURENCE ; M. TIRRELL.** Step Growth Polymerization. Wiley-VCH, 1992
- **H. TOBITA ; Y. OHTANI.** Control of Molecular Weight Distribution in Step-Growth Polymerization. *Polymer,* 1992, vol. 33 (4), 801-811
- Residence time distribution in a corotating twin-screw extruder. *Chemical Engineering Science,* 2000, vol. 55, 1641-1651
- **HEINZ UNBEHAUEN.** Regelungstechnik I-III. Springer Vieweg, 2008
- *Firma Witte Chem,* vol. 25, 6-3